(19)

**Europäisches Patentamt**

**European Patent Office**

**Office européen des brevets**

(11) **EP 2 471 878 A1**

(12) **EUROPÄISCHE PATENTANMELDUNG**

(43) Veröffentlichungstag:
**04.07.2012 Patentblatt 2012/27**

(51) Int Cl.:
*C09C 1/22* (2006.01)   *C09C 1/24* (2006.01)
*C09C 1/34* (2006.01)   *C09C 1/36* (2006.01)

(21) Anmeldenummer: **10197401.2**

(22) Anmeldetag: **30.12.2010**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **LANXESS Deutschland GmbH
51369 Leverkusen (DE)**

(72) Erfinder:
• **Chlopek, Krzysztof Dr.
47800 Krefeld (DE)**
• **Kischkewitz, Jürgen Dr.
40883 Ratingen (DE)**
• **Kohnert, Lutz
47228 Duisburg (DE)**
• **Inden, Holger
42113 Wuppertal (DE)**

(54) **Öl- und wachshaltige Mittel in stückiger Form für die Asphalt- und Bitumeneinfärbung**

(57)    Die vorliegende Erfindung betrifft Mittel enthaltend mindestens ein anorganisches Pigment, ein oder mehrere Öle sowie ein oder mehrere Wachse, sowie Verfahren zu deren Herstellung und ihre Verwendung zum Einfärben von Baustoffen, vorzugsweise Asphalt, Bitumen, bituminösen Mischungen, Teer und teerhaltigen Zusammensetzungen, sowie ein Verfahren zum Einfärben von Baustoffen und die mit den Mitteln eingefärbten Baustoffe.

EP 2 471 878 A1

## Beschreibung

Die vorliegende Erfindung betrifft Mittel enthaltend mindestens ein anorganisches Pigment, ein oder mehrere Öle und ein oder mehrere Wachse, sowie Verfahren zu deren Herstellung und ihre Verwendung zum Einfärben von Baustoffen, vorzugsweise Asphalt, Bitumen, bituminösen Mischungen, Teer und teerhaltigen Zusammensetzungen, sowie ein Verfahren zum Einfärben von Baustoffen und die mit den Mitteln eingefärbten Baustoffe.

## Anwendungsgebiet

Die Verarbeitung von Pigmenten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und Kleben an Verpackungen, Maschinenteilen und Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen, wie zum Beispiel Eisenoxidpigmenten, ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung in Baustoffen und organischen Medien ist deshalb das Ziel im Umgang mit Pigmenten. Dieses Ziel wird mehr oder weniger durch Anwendung von Granulationsverfahren auf Pigmente erreicht.

Grundsätzlich werden von Pigmentgranulaten, unabhängig davon, aus welchem Herstellungsverfahren sie stammen, vom Markt zwei sich in der Richtung gegensätzliche Eigenschaften gefordert: mechanische Stabilität (Abriebsstabilität) des Granulats und gute Dispergiereigenschaften im eingesetzten Medium. Die mechanische Stabilität ist verantwortlich für gute Transporteigenschaften sowohl beim Transport zwischen Hersteller und Anwender als auch für gute Dosierung und Fließeigenschaften beim Einsatz der Pigmente. Sie wird durch hohe Haftkräfte bewirkt und hängt zum Beispiel von Bindemittelmenge und -art ab. Andererseits wird die Dispergierbarkeit durch eine gute Mahlung vor der Granulierung (Nass- und Trockenmahlung), durch die mechanische Energie bei der Einarbeitung in das jeweilige Anwendungsmedium (Scherkräfte) und durch Dispergierhilfsmittel, die die Haftkräfte im Granulat bei der Einarbeitung in ein Medium sofort herabsetzen, beeinflusst. Zur Erzielung des optimalen Farbeindrucks ist ein Zerteilen der Pigmentgranulate zu Primärteilchen erforderlich. Bei anorganischen Pigmenten ist die Anwendung von größeren Mengen Dispergierhilfsmittel wegen des Kostenverhältnisses Hilfsmittel/Pigment eingeschränkt.

Zum Einfärben von Baustoffen, wie beispielsweise Asphalt, werden die Pigmente teilweise noch in pulverförmigem Zustand eingesetzt. Sie haben in gemahlener Form den Vorteil der guten Dispergierbarkeit. Die vollständige und homogene Verteilung solcher pulverförmigen anorganischen Pigmente erfolgt im Asphaltmischer in einer kurzen Zeit - in der Regel innerhalb einer Minute. Der Nachteil dieser feinen Pulver besteht darin, dass sie kein gutes Fließverhalten aufweisen und sich beim unsachgemäßen Lagern häufig zusammenballen und verklumpen können. Sie kleben an Verpackungen und Maschinenteilen, wodurch die genaue Dosierung bei der Verarbeitung erschwert wird. Ein weiterer Nachteil der Pulver besteht darin, dass sie zum Stauben neigen.

## Stand der Technik

Die Staubvermeidung und verbesserte Dosierung bei der Anwendung von Pigmenten zur Einfärbung von organischen Medien, besonders von Asphalt, ist ein vorrangiges Ziel, weil die Asphaltmischanlagen sehr oft in Wohnbezirken lokalisiert sind.

Gemäß der Lehre von US 3,778,288 können Granulate als "Master Batches" unter Zugabe von Wachsen in einem Aufbaugranulationsverfahren über einen beheizbaren Mischer hergestellt werden. Dabei werden je nach Reaktionsbedingungen unterschiedliche Korngrößen erzielt. Das Anwendungsgebiet dieser Granulate liegt in der Färbung von Polymeren wie Kunststoffen, Wachsen oder Harzen. Die optimalen Korngrößen der Granulate liegen für solche Anwendungen zwischen 0,2 und 2 mm (70 bis 10 mesh). Dabei werden die als Bindemittel eingesetzten Wachse bevorzugt in Konzentrationen von 26% bis 65 Gew.% bezogen auf die eingesetzte Pigmentmenge verwendet. Dieser hohe Bindemittelanteil ist für die Anwendung der Färbung von Baustoffen nachteilig, da das Bindemittel einen negativen Effekt auf die Eigenschaften der Baustoffe ausüben kann. Zudem sind deutlich höhere Mengen an "Master Batch" im Vergleich zum anorganischen Pigment notwendig, um die gleiche Färbewirkung zu erzielen, wobei die Anwendung damit unwirtschaftlich wird.

In EP 0 567 882 A1 wurde ein Verfahren zur Einfärbung von Asphalt und/oder Bitumen mit anorganischen Pigmentgranulaten beschrieben, in dem die Granulate unter Zusatz von Ölen und/oder Wachsen entstehen können. Mit der angegebenen Menge von Additiven (0,01 - bis 10 Gew.% in Bezug auf Pigment) kann man zwar die Dispergierbarkeit der Granulate in Bitumen verbessern, allerdings können mit diesem Verfahren keine Granulate mit ausreichender mechanischen Stabilität hergestellt werden.

EP 1 598 395 A1 beschreibt eine Zusammensetzung auf Basis von Copolymeren von Ethyl-Vinyl-Acetat für Asphalt. Hierbei handelt es sich um Extrusionsgranulate. Dem Fachmann ist bekannt, dass Kunststoffextrusion mit Eisenoxid aufgrund der Abrasionseigenschaften des Pigmentes zu großem Verschleiß der Geräte führt, die bei der Asphaltverarbeitung eingesetzt werden.

In US 6,706,110 B2 und US 6,780,234 B2 wurden Pigmentgranulate für die Einfärbung von unpolaren Medien wie Asphalt und Bitumen unter Zusatz von Wachsen und Dispergiermittel für polare Medien offenbart. Bei dem Verfahren handelt es sich um ein Sprühgranulationsverfahren von wässrigen Systemen. Die Sprühgranulation erfordert wegen der Tropfenbildung die Verwendung von gut fließfähigen, also dünnflüssigen Suspensionen. Da für den Trocknungsvorgang eine größere Menge an Wasser zu verdampfen ist, ist das Verfahren jedoch energieaufwändig und deshalb vor allem dann vorteilhaft anzuwenden, wenn die zu granulierenden Pigmente bedingt durch den Pigmentherstellungsprozess in der Nassphase, beispielsweise in einer wässrigen Suspension oder Paste, vorliegen. Bei Pigmenten, die über einen trockenen Herstellungsprozess, beispielsweise einen Glühprozess, hergestellt wurden, bedeutet die Sprühgranulation einen zusätzlichen Verfahrensschritt, da das bereits in trockenem Zustand anfallende Pigment wieder in Wasser aufgeschlämmt und getrocknet werden muss. Zusätzlich weisen die Sprühgranulate eine Korngröße zwischen 20 bis 500 $\mu$m auf, was bei der Dosierung signifikante Staubentwicklung verursacht. In der Asphaltverarbeitung werden aus der Sichtweise des Arbeitsschutzes Partikel mit einer Korngröße von kleiner als 1 mm noch als Staub angesehen.

Die nach dem Stand der Technik bereitgestellten Pigmentzusammensetzungen eignen sich also nicht für eine wirtschaftliche und unter arbeitstechnischen Gesichtspunkten vertretbare Verwendung zur Einfärbung von Baustoffen, die bei höheren Temperaturen als Umgebungstemperatur verarbeitet werden, wie Asphalt, Bitumen, bituminöse Mischungen, Teer und teerhaltige Zusammensetzungen.

Der vorliegenden Erfindung lag daher die Aufgabe zugrunde, staubarme, gut dosierbare anorganische Pigmente enthaltende Mittel bereitzustellen, die wirtschaftlich herstellbar sind und die sich zum Einfärben von Baustoffen eignen, die bei höheren Temperaturen als Umgebungstemperatur verarbeitet werden.

Überraschenderweise gelingt die Lösung der gestellten Aufgabe durch die Bereitstellung von Mitteln enthaltend mindestens ein anorganisches Pigment, ein oder mehrere Öle und ein oder mehrere Wachse.

Gegenstand der Erfindung ist daher ein Mittel, enthaltend mindestens ein anorganisches Pigment, ein oder mehrere Öle und ein oder mehrere Wachse, bei dem mindestens 50 Gew.%, bevorzugt mindestens 70 Gew. %, besonders bevorzugt mindestens 80 Gew.%, des Mittels eine Korngröße von 1 mm oder größer, bevorzugt von 1 bis 10 mm, besonders bevorzugt von 1 bis 6 mm, aufweisen, dadurch gekennzeichnet, dass das Mittel einen Abriebswert von 10 Gew.% oder weniger, bevorzugt von 5 Gew.% oder weniger und besonders bevorzugt von 2 Gew.% oder weniger, aufweist. Unter Abriebswert wird im Sinne der Erfindung der prozentuale Gewichtsanteil an Unterkorn verstanden, der in dem nach dem unter "Beispiele und Methoden" beschriebenen Abriebstest nach einer Aufwirbelung des Mittels über einen Zeitraum von 5 Minuten gemessen wurde.

Das erfindungsgemäße Mittel erfüllt die Anforderungen bezüglich der Dispergierbarkeit in den Anwendungsmedien und bezüglich des erzielten Farbtons im Vergleich zum ungranulierten anorganischen Pigment in den gefärbten Anwendungsmedien.

Das erfindungsgemäße Mittel liegt in stückiger Form vor. Unter "Mittel" sind im Folgenden Agglomerate von Primärpartikeln zu verstehen, die sich von der maximalen räumlichen Ausdehnung her von der der Primärpartikel unterscheiden. Unter "Mittel" werden auch Granulate verstanden. Unter "Granulat" bzw. "in Granulatform" wird im Kontext der Erfindung jedes Material verstanden, dessen mittlere Korngröße im Vergleich mit den Ausgangsmaterialien durch einen Behandlungsschritt vergrößert worden ist. "Granulat" bzw. "in Granulatform" umfasst daher nicht nur Sprühgranulate, Kompaktierungsgranulate (Press- oder Brikettiergranulate) oder Aufbaugranulate, sondern auch zum Beispiel Produkte einer Nass- oder Feuchtbehandlung mit anschließender Zerkleinerung, und Produkte trockener oder im Wesentlichen trockener Verarbeitungsschritte, zum Beispiel trocken hergestellte Granulate, Briketts und dergleichen. Bevorzugt sind die erfindungsgemäßen Mittel Aufbaugranulate, besonders bevorzugt welche, die über einen beheizbaren Mischer hergestellt werden.

Die erfindungsgemäßen Mittel liegen bevorzugt in Form von sphärischen Agglomeraten vor, wobei diese eine Kugelform oder eine ellipsoide Form sowie deren Zwischenformen aufweisen können.

Es sei darauf hingewiesen, dass vom Umfang der Erfindung auch beliebige Kombinationen der genannten Bereiche und Vorzugsbereiche für jedes Merkmal einschließlich von Kombinationen von Vorzugsbereichen umfasst sind.

In den erfindungsgemäßen Mitteln sind die anorganischen Pigmente bevorzugt aus der Gruppe von Eisenoxiden, Eisenoxidhydroxiden, Chromoxiden, Titandioxiden und/oder Mischphasenpigmenten auf Basis von Metalloxiden ausgewählt. Zu den Eisenoxiden gehören beispielsweise Hämatit (Eisenoxid Rot) oder Magnetit (Eisenoxid Schwarz). Zu den Eisenoxidhydroxiden gehört z.B. Goethit (Eisenoxid Gelb). Mischphasenpigmente auf Basis von Metalloxiden sind z.B. Zinkferrite (Mischphasenpigment aus Zinkoxid und Eisenoxid) oder Manganferrite (Mischphasenpigment aus Manganoxid und Eisenoxid). Das erfindungsgemäße Mittel kann ein oder mehrere anorganische Pigmente enthalten. Bevorzugt enthält das erfindungsgemäße Mittel ein anorganisches Pigment.

Die erfindungsgemäßen Mittel enthalten ein oder mehrere Öle. Als Öle werden in dem erfindungsgemäßen Zusammenhang unpolare oder leicht polare, nicht leichtflüchtige, bei Raumtemperatur flüssige Substanzen verstanden.

Bevorzugt sind Öle mit einer kinematischen Viskosität von 1,6 bis 1.500 mm³/s bei 40°C (gemessen nach DIN 51562). In den erfindungsgemäßen Mitteln sind weiterhin bevorzugt die Öle aus der Gruppe von synthetischen Ölen, die im Wesentlichen aus den Elementen Kohlenstoff und Wasserstoff und/oder Stickstoff und/oder Sauerstoff und/oder Schwefel und/oder Halogenen (vorzugsweise Fluor, Chlor, Brom und/oder Iod) und/oder Bor bestehen, mineralischen Ölen, tierischen und/oder pflanzlichen Ölen ausgewählt. Besonders bevorzugt sind in den erfindungsgemäßen Mitteln synthetische Öle auf Kohlenwasserstoffbasis oder mineralische (aus Erdölen oder Kohlen gewonnene) Öle enthalten.

In den erfindungsgemäßen Mitteln beträgt die Gesamtmenge an Öl oder Ölen bevorzugt von 0,1 bis 5,0 Gew. %, besonders bevorzugt von 0,4 % bis 3,0 Gew.%, ganz besonders bevorzugt von 0,5 bis 2,45 Gew.%, bezogen auf die Gesamtmenge des Mittels. Das erfindungsgemäße Mittel kann ein oder mehrere Öle enthalten. Bevorzugt enthält das erfindungsgemäße Mittel ein Öl.

In den erfindungsgemäßen Mitteln beträgt die Gesamtmenge an Wachs oder Wachsen bevorzugt von größer als 10 bis 25 Gew.%, besonders bevorzugt von 13 bis 20 Gew.%, bezogen auf die Gesamtmenge des Mittels. Das erfindungsgemäße Mittel kann ein oder mehrere Wachse enthalten. Bevorzugt enthält das erfindungsgemäße Mittel ein Wachs.

Unter Wachs wird eine Substanz verstanden, die grob bis feinkristallin ist, über 40°C ohne Zersetzung schmilzt und schon wenig oberhalb des Schmelzpunktes verhältnismäßig niedrigviskos und nicht fadenziehend ist. Vorzugsweise enthält das erfindungsgemäße Mittel ein oder mehrere höher schmelzende natürliche und/oder chemisch modifizierte und/oder synthetische Wachse. Bevorzugt sind die Wachse aus der Gruppe von Fischer-Tropsch Wachsen, Mineralwachsen, Montanwachsen, pflanzlichen Wachsen und/oder tierischen Wachsen ausgewählt. Fischer-Tropsch Wachse sind synthetische aliphatische Kohlenwasserstoffe, d.h. synthetische Paraffin-Wachse mit hoher Molekülmasse und einer Kettenlänge von 20 bis 120 Kohlenstoffatomen. Zu der Gruppe der Fischer-Tropsch Wachse gehören auch oxidierte Fischer-Tropsch Wachse. Fischer-Tropsch Wachse weisen in der Regel einen Erstarrungspunkt von größer als 70°C auf. Sie sind relativ hart, was über die Nadelpenetration bei 25°C in der Einheit "mm" gemessen werden kann. Für die Messung der Nadelpenetration bei unterschiedlichen Temperaturen, wie z.B. 25°C oder 65°C existieren z.B. die Methoden nach ASTM D 1321 oder DIN 51579. Für diese Wachse liegen typische Werte der Nadelpenetration bei 25°C im Bereich von 0,1 mm bis 1 mm. Fischer-Tropsch Wachse werden über das sogenannten Fischer-Tropsch-Verfahren aus Synthesegas (Wasserstoff, Kohlenmonoxid) aus Kohlevergasung oder aus Erdgas in Gegenwart von Katalysatoren hergestellt. Mineralwachse sind Gemische normaler, verzweigtkettiger und ringförmiger gesättigter Kohlenwasserstoffe, die durch Raffination von Wachsen fossilen Ursprungs gewonnen werden, wie z.B. Ceresin. Zu der Gruppe der Mineralwachse gehören auch die mikrokristallinen Hartwachse. Montanwachse sind aus Braunkohlesorten extrahierbare natürliche Wachse. Diese sind aus Harzen, Wachsen u. Fetten tertiärer Pflanzen entstanden. Pflanzliche Wachse sind z.B. Zuckerrohrwachs oder Carnaubawachs. Zu den tierischen Wachsen gehören Walrat, Wollwachs und Bienenwachs. Die Wachse können dabei in ihrer ursprünglichen, d.h. nicht chemisch modifizierten Form, oder in deren chemisch modifizierten Formen vorliegen.

Bevorzugt enthalten die erfindungsgemäßen Mittel Fischer-Tropsch Wachse und/oder Mineralwachse. Aus der Gruppe der Mineralwachse sind mikrokristalline Hartwachse besonders bevorzugt.

Insbesondere weisen die Wachse einen Erstarrungspunkt zwischen 50 und 140°C, bevorzugt zwischen 70 und 120°C, besonders bevorzugt zwischen 80 und 110°C auf. Bevorzugt enthalten die erfindungsgemäßen Mittel Wachse mit einer dynamischen Viskosität bei 120°C unter 800 mPas, besonders bevorzugt unter 300 mPas, ganz besonders bevorzugt von 1 bis 100 mPas.

Die physikalische Eigenschaft des Erstarrungspunktes, der eine größere technische Bedeutung für die Verarbeitung von Wachsen als der Schmelzpunkt hat, wird bei Wachsen oft anstatt des Schmelzpunktes gemessen. Der Erstarrungspunkt kann nach ISO 2207 oder auch nach ASTM D 938 gemessen werden.

Die erfindungsgemäßen Mittel können zusätzlich weitere Hilfsstoffe enthalten, die jedoch die Eigenschaften des Mittels wie Staubverhalten, Dosierbarkeit und Dispergierbarkeit nicht verschlechtern dürfen, oder das erfindungsgemäße Mittel enthält diese weiteren Hilfsstoffe eben nicht.

Das erfindungsgemäße Mittel enthält besonders bevorzugt die Kombination aus Eisenoxid oder Chromoxid, einem mineralischen Öl und einem mikrokristallinen Hartwachs.

Die Erfindung betrifft auch Verfahren zur Herstellung der erfindungsgemäßen Mittel, dadurch gekennzeichnet, dass entweder

a) mindestens ein anorganisches Pigment mit einem oder mehreren Ölen vermischt und

b) das Gemisch aus Schritt a) mit einem oder mehreren Wachsen vermischt wird,

c) die Mischung aus Schritt b) bei einer Temperatur oberhalb des Erstarrungspunktes des Wachses oder der Wachse weiter gemischt wird, (Variante A) oder

a') mindestens ein anorganisches Pigment mit einem oder mehreren Wachsen vermischt und

b') das Gemisch aus Schritt a') mit einem oder mehreren Ölen vermischt wird,

c') die Mischung aus Schritt b') bei einer Temperatur oberhalb des Erstarrungspunktes des Wachses oder der Wachse weiter gemischt wird, (Variante B)

oder

mindestens ein anorganisches Pigment gleichzeitig mit einem oder mehreren Ölen und mit einem oder mehreren Wachsen vermischt wird, und die Mischung anschließend bei einer Temperatur oberhalb des Erstarrungspunktes des Wachses oder der Wachse weiter gemischt wird (Variante C).

Die Bildung des Mittels kann in diesem Zusammenhang auch als Granulataufbau bezeichnet werden. In bevorzugten Ausführungsformen der Varianten A, B und C des erfindungsgemäßen Verfahrens werden als Öle und Wachse die spezifischen Produkte eingesetzt, die unter diesen generischen Begriffen bei der Beschreibung des erfindungsgemäßen Mittels selbst offenbart wurden.

Die Herstellungsverfahren der Varianten A, B und C umfassen bevorzugt die Schritte, dass das entstandene Mittel auf Umgebungstemperatur abgekühlt und anschließend auf einen Korngrößenbereich gesiebt wird, sodass mindestens 50 Gew.-%, bevorzugt mindestens 70 Gew. %, besonders bevorzugt mindestens 80 Gew.%, des Mittels eine Korngröße von 1 mm oder größer, bevorzugt von 1 bis 10 mm, besonders bevorzugt von 1 bis 6 mm, aufweisen, oder es umfasst diese Schritte eben nicht. Dabei kann das Abkühlen des Mittels auf Umgebungstemperatur in einem Schwingförderer oder Wirbelbettkühler oder auf andere Weise mit flüssigen oder gasförmigen Medien durchgeführt werden oder eben nicht. Bei der Ausübung der Herstellungsverfahren der Varianten A, B und C ist es auch möglich, dass das nach der Siebung erhaltene Ober- und/oder Unterkorn, also das Mittel oberhalb und/oder unterhalb der gewünschten Korngröße, in das Herstellungsverfahren des Mittels zurückgeführt wird oder eben nicht. Während des Herstellungsverfahrens bilden sich dann aus dem zurückgeführten Ober- und/oder Unterkorn zusammen mit den anderen Komponenten, die in das Verfahren eingesetzt werden, die erfindungsgemäßen Mittel.

Bei dem erfindungsgemäßen Verfahren werden in den Ausführungsformen, in der die Zugabe des Öls oder der Öle, und des Wachses oder der Wachse zum anorganischen Pigment nacheinander erfolgt (Varianten A und B), die Schritte a) oder a') bevorzugt unterhalb der Erstarrungspunkte des Wachses oder der Wachse durchgeführt. Die Zugabe des Öls bzw. der Öle in Variante A oder des Wachses bzw. der Wachse in Variante B zum anorganischen Pigment kann vor Beginn oder während des Mischvorganges durchgeführt werden. In Variante A findet während des Mischvorganges eine gleichmäßige Verteilung des Öls auf dem anorganischen Pigment statt. Dabei bleibt das Pulver fließfähig. Anschließend wird die Mischung bevorzugt vor den Schritten b) oder b') auf 60 bis 150°C, besonders bevorzugt auf 90 bis 140°C, aufgeheizt. Dann werden in Variante A das Wachs bzw. die Wachse in Form von Pulver, Flocken, Stücken oder geschmolzen zu dem mit Öl behandelten anorganischen Pigment oder in Variante B das Öl bzw. die Öle zu dem mit dem Wachs vermischten anorganischen Pigment gegeben. Danach wird die Mischung auf eine Temperatur oberhalb der Erstarrungspunkte des Wachses oder der Wachse erhöht. Bevorzugt werden die Schritte c) oder c') bei 110°C bis 230°C durchgeführt. Die Temperaturerhöhung wird entweder durch die Scherkräfte während des Mischvorganges und/oder durch externe Wärmezufuhr erzeugt. Dabei schmilzt das Wachs und verteilt sich auf dem mit Öl behandelten anorganischen Pigment, wobei die Bildung des Mittels erfolgt.

Bei dem erfindungsgemäßen Verfahren wird in der Ausführungsform, in der die Zugabe des Öls oder der Öle, des Wachses oder der Wachse zum anorganischen Pigment gleichzeitig erfolgt (Variante C), das Vermischen des anorganischen Pigments mit dem oder den Ölen und dem oder den Wachsen bei Temperaturen unterhalb oder oberhalb der Erstarrungspunkte der Wachse durchgeführt. Bevorzugt erfolgt das Vermischen des anorganischen Pigments mit dem oder den Ölen, dem Wachs oder den Wachsen bei Temperaturen unterhalb der Erstarrungspunkte der Wachse. Anschließend wird die Temperatur der Mischung auf eine Temperatur oberhalb der Erstarrungspunkte des Wachses oder der Wachse, bevorzugt auf 110°C bis 230°C, erhöht und der Mischvorgang weiter fortgeführt. Die Temperaturerhöhung wird entweder durch die Scherkräfte während des Mischvorganges und/oder durch externe Wärmezufuhr erzeugt. Dabei schmilzt das Wachs und verteilt sich mit dem Öl auf dem anorganischen Pigment, wobei die Bildung des Mittels erfolgt.

Für das Mischen können verschiedene beheizbare Mischaggregate mit ausreichenden Mischwirkung und Scherkräften eingesetzt werden. Bevorzugt wird als Mischer ein beheizbarer Henschel-Mischer eingesetzt.

Die Korngröße der erfindungsgemäßen Mittel nimmt bei den Herstellungsverfahren der Varianten A, B und C während des Mischvorganges stetig zu. Der Mischungsvorgang wird daher zum geeigneten Zeitpunkt abgebrochen. Wird der Mischvorgang zu kurz durchgeführt, werden Mittel mit zu kleiner Teilchengröße erhalten. Bei einer zu langen Mischzeit werden die Mittel zu grob, was die Dispergierbarkeit in Asphalt negativ beeinflussen kann. Dies führt zu einer ungleichmäßigen Färbung des Asphaltes. Der Mischvorgang wird deshalb dann abgebrochen, wenn der maximale prozentuale Anteil des Mittels mit einer Korngröße von 1 mm oder größer, bevorzugt von 1 bis 10 mm, besonders bevorzugt von 1 bis 6 mm, bezogen auf die Gesamtmenge des Mittels, erreicht wurde.

Nach Abbruch des Mischvorganges in den Varianten A, B und C des erfindungsgemäßen Herstellungsverfahrens wird das erfindungsgemäße Mittel auf Umgebungstemperatur abgekühlt und anschließend auf einen Korngrößenbereich gesiebt, sodass mindestens 50 Gew.-% des Mittels eine Korngröße von 1 mm oder größer, bevorzugt mindestens 70 Gew. % des Mittels eine Korngröße von 1 mm oder größer, besonders bevorzugt mindestens 80 Gew.% des Mittels eine Korngröße von 1 mm oder größer,

oder

mindestens 50 Gew.-% des Mittels eine Korngröße von 1 bis 10 mm, bevorzugt mindestens 70 Gew. % des Mittels eine Korngröße von 1 bis 10 mm, besonders bevorzugt mindestens 80 Gew.% des Mittels eine Korngröße von 1 bis 10 mm,

oder

mindestens 50 Gew.-% des Mittels eine Korngröße von 1 bis 6 mm, bevorzugt mindestens 70 Gew. % des Mittels eine Korngröße von 1 bis 6 mm, besonders bevorzugt mindestens 80 Gew.% des Mittels eine Korngröße von 1 bis 6 mm, aufweisen.

Das erfindungsgemäße Mittel zeichnet sich aus durch eine gute Fließfähigkeit, durch einen geringen Staubanteil, eine gute Abriebstabilität sowie durch eine hohe Dispergierbarkeit in bitumen- oder teerhaltigen Baustoffen sowie durch einen ähnlich hohen und vergleichbaren Farbton im Anwendungsmedium im Vergleich zum ungranulierten anorganischen Pigment.

>

Die Erfindung betrifft auch die Verwendung des erfindungsgemäßen Mittels zum Einfärben von Baustoffen, vorzugsweise Asphalt, Bitumen, bituminösen Mischungen, Teer und teerhaltigen Zusammensetzungen. Hierzu wird das erfindungsgemäße Mittel dem Baustoff bei einer Temperatur oberhalb seines Erstarrungspunktes unter Mischen zugegeben. Der Mischvorgang wird fortgesetzt, bis die gleichmäßige Färbung des Baustoffes erreicht ist.

Die Erfindung betrifft auch ein Verfahren zum Einfärben von Baustoffen, vorzugsweise Asphalt, Bitumen, bituminösen Mischungen, Teer und teerhaltigen Zusammensetzungen, umfassend Mischen des erfindungsgemäßen Mittels mit dem Baustoff oberhalb dessen Erweichungspunktes. Dabei wird der Baustoff solange mit dem Mittel gemischt, bis die gleichmäßige Färbung des Baustoffes erreicht ist.

Die Erfindung betrifft ebenfalls Baustoffe, vorzugsweise Asphalt, Bitumen, bituminöse Mischungen, Teer und teerhaltige Zusammensetzungen, die mit dem erfindungsgemäßen Mittel gefärbt sind.

Der Gegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

**Beispiele und Methoden**

**I. Beschreibung der verwendeten Mess- und Prüfmethoden**

Die Ergebnisse der Messungen zu den Beispielen 1 und 2 sind in Tabelle 1 zusammengefasst.

**I.1 Dispergierbarkeit in Asphalt**

Die Bestimmung der Dispergierbarkeit in Asphalt erfolgte nach folgendem Verfahren: die Zuschläge (mineralische Füllstoffe zur Herstellung des Asphalts) wurden in einem beheizbaren Labormischer (Rego-Mischer) zusammen mit einem Straßenbaubitumen des Typs Pigmental® 50/70 (Handelsprodukt der Fa. TOTAL Bitumen Deutschland GmbH) 30 Sekunden lang bei 180 °C homogenisiert. Danach wurde die zu messende Pigmentprobe, d.h. die Mittel gemäß den Beispielen, zugegeben und weitere 120 Sekunden bei der Temperatur gemischt. Jeweils wurden 3 Gew.% Pigmentprobe zugegeben, bezogen auf die gesamte Zusammensetzung. Mit der Mischung werden Prüfkörper nach Marshall hergestellt ("The Shell Bitumen Handbook, Shell Bitumen U.K., 1990, Seite 230-232). Farbtonunterschiede der Marshall-Körper wurden farbmetrisch durch Vergleich der Rotwerte a* im Purton (gegen einen Marshall-Körper beurteilt, der mit einer gleichen Menge an Bayferrox® 130-Pulverbezug (Eisenoxid-Rotpigment der Firma LANXESS Deutschland GmbH) hergestellt wurde (Messgerät: Minolta Chromameter II, Normlichtart C, CIELAB-System, DIN 5033, DIN 6174). Unterschiede in den a*-Werten (Δa*-Werte) kleiner 1,0 CIELAB Einheiten sind visuell nicht unterscheidbar. Ist der Betrag des a*-Wertes des Prüfkörpers, der mit der zu messenden Probe gefärbt wurde, kleiner als der des Prüfkörpers, der mit dem Bayferrox® 130-Pulverbezug gefärbt wurde, weist dies auf eine geringere Dispergierbarkeit der zu messenden Probe im Vergleich zum Pulverbezug hin. Je kleiner der Betrag des Δa*-Werte bei dieser Messung ist, desto ähnlicher ist der Farbton der unterschiedlichen Messungen, was auf einen geringen Unterschied der Dispergierbarkeit der zu messenden Probe im Vergleich zu dem Bayferrox® 130-Pulverbezug hinweist.

**I.2 Bestimmung der Kornfraktion der Mittel**

Die Bestimmung der Kornfraktion wurde mit einem Vibrationssiebgerät Retsch Vibtronic Typ VE 1 mit Siebsätzen mit 1 und 6 mm durchgeführt (Siebsätze nach DIN ISO 3310). Das Mittel (50,0g) wurde auf das oberste, größte Sieb eingewogen. Der Siebsatzturm wurde 2 min mit Schwingungsintensität 1 mm vibriert. Danach wurde jedes einzelne Sieb gewogen und die Siebfraktion bestimmt.

**I.3 Bestimmung des Abriebswertes der Mittel**

Die Bestimmung des Abriebswertes wurde mit einer Rhewum-Luftstrahlsiebmaschine LPS 200 MC durchgeführt. Folgende Einstellungen wurden gewählt: Düse 1 mm, Volumenstrom 35 m$^3$/h, 1 mm Sieb, Drehzahl 18 rpm. Das Sieb nach DIN ISO 3310 wurde leer und anschließend mit 20 g Probe ausgewogen. Danach wurde die Siebmaschine eingeschaltet und die Probe wurde 1, 2, 3, 4 und 5 Minuten beansprucht (das Siebgut wurde durch den Luftstrahl aufgewirbelt). Nach jeder Minute wurde das Sieb mit der Probe gewogen und später auf die Maschine gesetzt und weitere Zeit gesiebt.

$$(20g \; (Einwaage) - Auswaage) / 20g \; Einwaage \; x \; 100 =$$

Berechnung:

$$Gew.\% \; Unterkorn \; (Abriebswert)$$

Als gute Abriebsstabilität (= niedriger Abriebswert) gemäß diesem Test wird eine Menge von 10 Gew.% oder weniger, bevorzugt 5 Gew.% oder weniger und besonders bevorzugt von 2 Gew.% oder weniger, an Unterkorn gemessen nach einer Aufwirbelung des Siebgutes über einen Zeitraum von 5 Minuten (= Abriebswert nach 5 min., s. Tabelle 1) definiert.

**II: Beispiele**

**Eigenschaften der verwendeten anorganischen Pigmente, Öle und Wachse**

**Bayferrox® 130 Pigmentpulver** der Fa. LANXESS Deutschland GmbH: Hämatit (rotes Eisenoxid) mit der BET-Oberfläche (nach DIN ISO 9277) 7-9 m$^2$/g

**Energol RC-R 100** der Fa. BP: mineralisches Öl mit der kinematischen Viskosität ca. 100 cSt bei 40°C (DIN 51562)

**Tecero® 30332**: mikrokristallines Wachs der Fa. Wachs- u. Ceresin-Fabriken Th. C. Tromm GmbH; Eigenschaften: Erstarrungspunkt (ISO 2207): 90 - 95°C, Penetration bei 25°C (DIN 51 579) 0,4 - 0,7 mm, Viskosität bei 120°C (DIN 53 019) 7-11 mPas

**Beispiel 1**

Zu 15,0 kg Eisenoxidrot-Pigment Bayferrox® 130 wurden 0,150 kg Verdichteröl Energol RC-R 100 bei Raumtemperatur zugegeben und die Mischung wurde in einem 75L Henschelmischer Typ FM75 auf ca. 100°C aufgeheizt und bis ca. 5 Min. gemischt und danach erfolgte die Zugabe von 2,65 kg Tecerowachs® 30332 und die gesamte Mischung wurde weiter ungefähr 25 Min. gemischt (Werkzeugdrehzahl ca. 780 rpm) und dabei bis ca. 180°C erwärmt. Die Temperatur wurde im Produkt gemessen.

Anschließend wurde das Mittel über ein Ventil ausgetragen und nach der Abkühlung gesiebt und gewogen. Die Ausbeute des Mittels wurde für den gesamten Bereich der Korngröße zwischen 1 bis 6 mm berechnet (Tabelle 1).

**Beispiel 2**

Zu 15,0 kg Eisenoxidrot-Pigment Bayferrox® 130 wurden 0,150 kg Verdichteröl Energol RC-R 100 und 2,70 kg Tecerowachs® 30332 bei Raumtemperatur zugegeben. Die Mischung wurde in einem 75L Henschelmischer Typ FM75 ca. 15 Min. gemischt (Werkzeugdrehzahl ca. 780 rpm) und dabei bis ca. 180°C erhitzt. Die Temperatur wurde im Produkt gemessen.

Anschließend wurde das Mittel über ein Ventil ausgetragen und nach der Abkühlung gesiebt und gewogen. Die Ausbeute des Mittels wurde für den gesamten Bereich der Korngröße zwischen 1 bis 6 mm berechnet (Tabelle 1).

**Tabelle 1: Erfindungsgemäße Beispiele.**

| | ÖI: Energol RC-R 100 | Wachs: Tecero®-Wachs 30332 | Ausbeute der Siebfraktion 1-6 mm | Dispergierbarkeit, gemessen über Δa* a) | Abriebswert (nach 5 Min.) |
|---|---|---|---|---|---|
| Mittel gemäß | Gew.% (bezogen auf Gesamtgewicht) | | Gew.% | CIELAB Einheiten | Gew.% |
| Beispiel 1 | 0,84 | 14,9 | >70 | ± 1,0 | <5 |
| Beispiel 2 | 0,84 | 15,1 | >70 | ± 1,0 | <5 |
| a) gemessen wurde die Differenz Δa* (= delta a*) = a*-Wert (Mittel) minus a*-Wert (Bezug) im Bitumen. Bezug: Bayferrox 130 Ausgangsmaterial | | | | | |

In den Beispielen 1 und 2 wurden Mittel mit den Ausbeuten für die Kornfraktion 1-6 mm über 70 Gew.% mit guten Farbeigenschaften erhalten. Farbmetrisch waren die Proben vergleichbar mit dem Bayferrox® 130 Pulverbezug (Ausgangsmaterial). Diese Mittel weisen eine sehr gute Abriebstabilität (= niedriger Abriebswert) auf (Tabelle 1).

**Beispiel 3 (Vergleichsbeispiel)**

Zu 15,0 kg Eisenoxidrot-Pigment Bayferrox® 130 wurden 1,50 kg Mikrowachs Tecerowachs® 30332 zugegeben und die Mischung wurde in einem 75L Henschelmischer Typ FM75 bis ca. 150°C aufgeheizt und dabei ca. 70 Min. gemischt (Werkzeugdrehzahl ca. 780 rpm, die Temperatur wurde im Produkt gemessen). Weder nach 20 Min. noch nach 70 Min. wurden Mittel in stückiger Form erhalten. Das Produkt blieb über die gesamte Mischzeit in Pulverform. Die Ausbeute für die Kornfraktion 1-6 mm betrug damit 0 Gew.%

**Beispiel 4 (Vergleichsbeispiel)**

Zu 15,0 kg Eisenoxidrot-Pigment Bayferrox® 130 wurden 15,0 kg Mikrowachs Tecerowachs® 30332 zugegeben und die Mischung wurde in einem 75L Henschelmischer Typ FM75 bis ca. 140°C aufgeheizt und dabei ca. 30 Min. gemischt (Werkzeugdrehzahl ca. 780 rpm, die Temperatur wurde im Produkt gemessen). Weder nach 20 Min. noch nach 30 Min. wurden Mittel in stückiger Form erhalten. Das Produkt war pastös. Die Ausbeute für die Kornfraktion 1-6 mm betrug damit 0 Gew.%.

**Beispiel 5 (Vergleichsbeispiel)**

Hier wurde das Beispiel 1 aus dem Patent EP 0 567 882 B1 (Herstellung eines Mittels über Tellergranulation) wiederholt. Es wurde eine Farbverschiebung Δa* von -0,6 CIELAB Einheiten gegen Bayferrox® 130 Pulver (Standard 2001) gefunden. Allerdings wies das Mittel eine nur sehr geringe Abriebstabilität auf (Abriebswert nach 5 Minuten von mehr als 20 Gew.%).

**Patentansprüche**

1.    Mittel enthaltend mindestens ein anorganisches Pigment, ein oder mehrere Öle und ein oder mehrere Wachse, bei dem mindestens 50 Gew.% des Mittels eine Korngröße von 1 mm oder größer aufweisen, **dadurch gekennzeichnet, dass** das Mittel einen Abriebswert von 10 Gew.% oder weniger aufweist.

2.    Mittel gemäß Anspruch 1, **dadurch gekennzeichnet, dass** die anorganischen Pigmente aus der Gruppe von Eisenoxiden, Eisenoxidhydroxiden, Chromoxiden, Titandioxiden und/oder Mischphasenpigmenten auf Basis von Metalloxiden ausgewählt sind.

3.    Mittel gemäß Anspruch 1 oder 2, **dadurch gekennzeichnet, dass** die Öle aus der Gruppe von synthetischen Ölen, die im Wesentlichen aus den Elementen Kohlenstoff und Wasserstoff und/oder Stickstoff und/oder Sauerstoff und/oder Schwefel und/oder Halogenen und/oder Bor bestehen, mineralischen Ölen, tierischen und/oder pflanzlichen Ölen ausgewählt sind.

4. Mittel gemäß einem oder mehreren der Ansprüche 1 bis 3, **dadurch gekennzeichnet, dass** die Gesamtmenge an Öl oder Ölen von 0,1 bis 5,0 Gew.% bezogen auf die Gesamtmenge des Mittels beträgt.

5. Mittel gemäß einem oder mehreren der Ansprüche 1 bis 4, **dadurch gekennzeichnet, dass** die Wachse einen Erstarrungspunkt zwischen 50 und 140°C aufweisen.

6. Mittel gemäß einem oder mehreren der Ansprüche 1 bis 5, **dadurch gekennzeichnet, dass** die Wachse aus der Gruppe von Fischer-Tropsch Wachsen, Mineralwachsen, Montanwachsen, pflanzlichen Wachsen und/oder tierischen Wachsen ausgewählt sind.

7. Mittel gemäß einem oder mehreren der Ansprüche 1 bis 6, **dadurch gekennzeichnet, dass** die Gesamtmenge an Wachs oder Wachsen von größer als 10 bis 25 Gew.%, bevorzugt von 13 bis 20 Gew.%, bezogen auf die Gesamtmenge des Mittels, beträgt.

8. Verfahren zur Herstellung von Mitteln gemäß einem oder mehreren der Ansprüche 1 bis 7, **dadurch gekennzeichnet, dass** entweder

   a) mindestens ein anorganisches Pigment mit einem oder mehreren Ölen vermischt und
   b) das Gemisch aus Schritt a) mit einem oder mehreren Wachsen vermischt wird,
   c) die Mischung aus Schritt b) bei einer Temperatur oberhalb des Erstarrungspunktes des Wachses oder der Wachse weiter gemischt wird,
   oder

   a') mindestens ein anorganisches Pigment mit einem oder mehreren Wachsen vermischt und
   b') das Gemisch aus Schritt a') mit einem oder mehreren Ölen vermischt wird,
   c') die Mischung aus Schritt b') bei einer Temperatur oberhalb des Erstarrungspunktes des Wachses oder der Wachse weiter gemischt wird,

   oder
   mindestens ein anorganisches Pigment gleichzeitig mit einem oder mehreren Ölen und mit einem oder mehreren Wachsen vermischt wird, und die Mischung anschließend bei einer Temperatur oberhalb des Erstarrungspunktes des Wachses oder der Wachse weiter gemischt wird.

9. Verfahren zur Herstellung von Mitteln gemäß Anspruch 8, **dadurch gekennzeichnet, dass** das entstandene Mittel auf Umgebungstemperatur abgekühlt und anschließend auf einen Korngrößenbereich gesiebt wird, sodass mindestens 50 Gew.-% des Mittels eine Korngröße von 1 mm oder größer aufweisen.

10. Verfahren zur Herstellung von Mitteln gemäß Anspruch 8 oder 9, **dadurch gekennzeichnet, dass** die Schritte a) oder a') bei einer Temperatur unterhalb der Erstarrungspunkte der Wachse durchgeführt werden.

11. Verfahren zur Herstellung von Mitteln gemäß einem oder mehreren der Ansprüche 8 bis 10, **dadurch gekennzeichnet, dass** die Mischung vor den Schritten b) oder b') auf 60°C bis 150°C aufgeheizt wird.

12. Verfahren zur Herstellung von Mitteln gemäß einem oder mehreren der Ansprüche 8 bis 11, **dadurch gekennzeichnet, dass** die Schritte c) oder c') bei 110 bis 230°C durchgeführt werden.

13. Verfahren zur Herstellung von Mitteln gemäß einem oder mehreren der Ansprüche 8 bis 12, **dadurch gekennzeichnet, dass** nach gleichzeitiger Zugabe von Öl oder Ölen, Wachs oder Wachsen zum anorganischen Pigment die Temperatur dieser Mischung auf 110°C bis 230°C erhöht wird.

14. Verwendung von Mitteln gemäß einem oder mehreren der Ansprüche 1 bis 7 zum Einfärben von Baustoffen, vorzugsweise Asphalt, Bitumen, bituminösen Mischungen, Teer und teerhaltigen Zusammensetzungen.

15. Verfahren zum Einfärben von Baustoffen, vorzugsweise Asphalt, Bitumen, bituminösen Mischungen, Teer und teerhaltigen Zusammensetzungen umfassend Mischen des Mittels gemäß einem oder mehreren der Ansprüche 1 bis 7 mit dem Baustoff oberhalb dessen Erweichungspunktes.

16. Baustoffe, **dadurch gekennzeichnet, dass** sie mit Mitteln gemäß einem oder mehreren der Ansprüche 1 bis 7

eingefärbt sind.

Europäisches
Patentamt

European
Patent Office

Office européen
des brevets

# EUROPÄISCHER RECHERCHENBERICHT

Nummer der Anmeldung

EP 10 19 7401

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 215 249 A1 (DEGUSSA [DE]) 19. Juni 2002 (2002-06-19) * Absätze [0006], [0021] - [0023], [0031]; Ansprüche 1,4,14,15; Tabelle 3 * ----- | 1-8, 10-16 | INV. C09C1/22 C09C1/24 C09C1/34 C09C1/36 |
| X,D | EP 0 567 882 A1 (BAYER AG [DE]) 3. November 1993 (1993-11-03) * Seite 2, Zeile 46 - Zeile 51 * * Seite 3, Zeile 1 - Zeile 7 * * Beispiele 1,2 * ----- | 1-16 | |

RECHERCHIERTE SACHGEBIETE (IPC)

C09C
C04B

Der vorliegende Recherchenbericht wurde für alle Patentansprüche erstellt

| Recherchenort | Abschlußdatum der Recherche | Prüfer |
|---|---|---|
| München | 23. März 2011 | Nobis, Barbara |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 19 7401

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2011

| Im Recherchenbericht angeführtes Patentdokument | Datum der Veröffentlichung | Mitglied(er) der Patentfamilie | | Datum der Veröffentlichung |
|---|---|---|---|---|
| EP 1215249 A1 | 19-06-2002 | AT | 265500 T | 15-05-2004 |
| | | BR | 0106145 A | 13-08-2002 |
| | | CA | 2365161 A1 | 16-06-2002 |
| | | CZ | 20014440 A3 | 16-04-2003 |
| | | DE | 10062942 A1 | 11-07-2002 |
| | | DE | 50102114 D1 | 03-06-2004 |
| | | DK | 1215249 T3 | 26-07-2004 |
| | | ES | 2215841 T3 | 16-10-2004 |
| | | HU | 0105342 A2 | 28-07-2003 |
| | | JP | 3893278 B2 | 14-03-2007 |
| | | JP | 2002256171 A | 11-09-2002 |
| | | KR | 20020048870 A | 24-06-2002 |
| | | MX | PA01012975 A | 06-08-2002 |
| | | PL | 351156 A1 | 17-06-2002 |
| | | PT | 1215249 E | 31-08-2004 |
| | | TR | 200401253 T4 | 21-07-2004 |
| | | US | 2002112646 A1 | 22-08-2002 |
| EP 0567882 A1 | 03-11-1993 | DE | 4214195 A1 | 04-11-1993 |
| | | JP | 2659058 B2 | 30-09-1997 |
| | | JP | 7258552 A | 09-10-1995 |
| | | US | 5389137 A | 14-02-1995 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3778288 A
- EP 0567882 A1
- EP 1598395 A1
- US 6706110 B2
- US 6780234 B2
- EP 0567882 B1

**In der Beschreibung aufgeführte Nicht-Patentliteratur**

- The Shell Bitumen Handbook. Shell Bitumen, 1990, 230-232